# EUROPÄISCHE PATENTSCHRIFT

(11) **EP 2 024 131 B1**
(45) Veröffentlichungstag und Bekanntmachung des Hinweises auf die Patenterteilung: **14.03.2012**
(21) Anmeldenummer: 06753526.0
(22) Anmeldetag: 09.05.2006
(51) Int. Cl.: B23K 26/08, B23K 26/42, B23Q 1/00, B23Q 37/00

(54) **LASERBEARBEITUNGSMASCHINE MIT EINEM RELATIV ZUM RAHMEN DER MASCHINE BEWEGBAREN LASERGENERATOR**
LASER MACHINING MACHINE WITH A LASER GENERATOR THAT IS MOVEABLE RELATIVE TO THE FRAME OF THE MACHINE
MACHINE D'USINAGE AU LASER AVEC UN GENERATEUR LASER MOBILE PAR RAPPORT AU CHASSIS DE LA MACHINE

(43) Veröffentlichungstag der Anmeldung: 18.02.2009
(73) Patentinhaber: Trumpf Laser- und Systemtechnik GmbH, 71254 Ditzingen (DE)
(72) Erfinder: LINK, Gerhard, 75438 Knittlingen (DE)
(74) Vertreter: Kohler Schmid Möbus
(86) Internationale Anmeldenummer: PCT/EP2006/004325
(87) Internationale Veröffentlichungsnummer: WO 2007/128332

(56) Entgegenhaltungen:
- JP-A- 10 156 568
- JP-A- 60 037 286
- US-A- 3 383 491
- US-A- 4 833 764
- US-A- 4 940 880
- US-A- 4 976 598
- US-A1- 2002 104 935
- US-A1- 2005 224 471

## Beschreibung

Die vorliegende Erfindung betrifft eine Laserbearbeitungsmaschine gemäß dem Oberbegriff des Anspruchs 1 (siehe, z.B., US 4 940 880).

Derartige Laserbearbeitungsmaschinen sind allgemein bekannt.

Der Lasergenerator wird in der Regel seitlich an dem Maschinenrahmen fest montiert. Daraus ergibt sich eine Störkontur beim Transport der Laserbearbeitungsmaschine. Wenn der Lasergenerator in die Laserbearbeitungsmaschine integriert ist, ist zwar keine Störkontur vorhanden, aber der Lasergenerator ist unzugänglich angeordnet.

Der Erfindung liegt die Aufgabe zu Grunde, den Lasergenerator derart am Maschinenrahmen anzuordnen, dass keine Störkontur beim Transport der Laserbearbeitungsmaschine gegeben ist.

Diese Aufgabe wird erfindungsgemäß durch eine Laserbearbeitungsmaschine gemäß Anspruch 1 gelöst. Der Lasergenerator kann aus einer Arbeitsposition in eine Transportposition verschwenkt werden. Der Lasergenerator wird an der Laserbearbeitungsmaschine vollständig vormontiert. Zum Transport wird der Lasergenerator derart am Maschinenrahmen verschwenkt, dass der Lasergenerator seitlich nicht über den Maschinenrahmen hinausragt. Das Transportmaß wird lediglich durch den Maschinenrahmen bestimmt. Bei der Endmontage vor Ort muss der Lasergenerator nicht erneut justiert werden. Kabel und Schläuche müssen nicht mehrmals montiert werden. Trotz der Verschwenkbarkeit besteht eine stabile konstante Zuordnung des Lasergenerators zum Maschinenrahmen. Diese Zuordnung wird gemäß der Erfindung durch eine Zentrierhilfe unterstützt.

Neben der Arbeitsposition und der Transportposition kann der Lasergenerator auch zum Zwecke der Wartung in eine entsprechende Stellung gebracht werden. Der Lasergenerator weist dadurch eine gute Zugänglichkeit auf, weil der Lasergenerator nicht im Innenraum der Laserbearbeitungsmaschine angeordnet ist.

Mithilfe der Erfindung kann der am Maschinenrahmen montierte Laserresonator zu Transportzwecken weg geschwenkt werden. Dadurch lassen sich die Außenkontur der Maschine auf ein günstiges Transportmaß und der Installationsaufwand reduzieren.

Ein Ausführungsbeispiel der Erfindung ist in der Zeichnung schematisch dargestellt und wird nachfolgend mit Bezug zu den Figuren der Zeichnung näher erläutert. Es zeigt im Einzelnen:
- **Fig. 1**: eine Draufsicht einer Laserbearbeitungsmaschine;
- **Fig. 2**: eine perspektivische Ansicht einer Laserkonsole mit einem Lasergenerator der Laserbearbeitungsmaschinen nach Figur 1;
- **Fig. 3**: eine Ansicht der Rückseite der Laserkonsole nach Figur 2;
- **Fig. 4**: eine vergrößerte Seitenansicht der Laserkonsole.

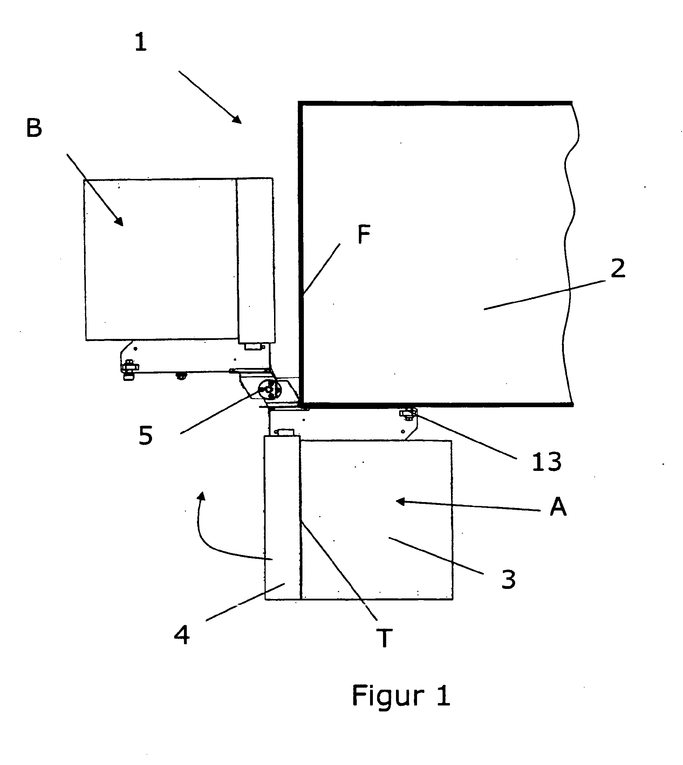

Aus der **Fig. 1** ist ersichtlich, dass eine Laserbearbeitungsmaschine **1** einen Maschinenrahmen **2** und einen Lasergenerator **3** umfasst. Der Lasergenerator 3 ist an dem Maschinenrahmen 2 mithilfe einer Laserkonsole **4** befestigt. Die Befestigung ist schwenkbar ausgebildet, so dass der Lasergenerator 3 in verschiedene Positionen gebracht werden kann. Als wesentliches Befestigungsmittel gemäß der Erfindung ist in der Figur 1 eine Achse **5** zu erkennen. Die Befestigung erlaubt es, die Laserkonsole 4 zusammen mit dem Lasergenerator 3 aus einer Betriebsposition **A** in eine Transportposition **B** zu verschwenken. In der Transportposition B ist der Lasergenerator 3 vollständig hinter dem Maschinenrahmen 2 angeordnet, ohne dass der Lasergenerator 3 seitlich über den Maschinenrahmen 2 hinaus ragt. Beim Transport der Laserbearbeitungsmaschine 1 muss daher lediglich die Breite des Maschinenrahmens 2 berücksichtigt werden. Der Lasergenerator 3 bildet somit keine Störkontur beim Transport. Zum Transport ist die Laserkonsole 4 um ca. 170° - 180° verschwenkt (Position B). Zur Durchführung von Wartungsarbeiten ist es möglich, die Laserkonsole 4 auch um einen anderen Winkel, beispielsweise um ca. 30°, zu verschwenken.

Die Laserkonsole 4 besitzt eine Abstützung in Form von Stützfüßen, welche vor dem Verschwenken und vor dem Transport vom Boden weg hoch gedreht werden können. Beim Transport sind die Stützfüße herunter gedreht, so dass die Laserkonsole 4 auf dem Boden des Transportfahrzeugs sicher aufsteht. Ebenso steht die Laserkonsole 4 beim Betrieb der Laserbearbeitungsmaschine 1 sicher auf.

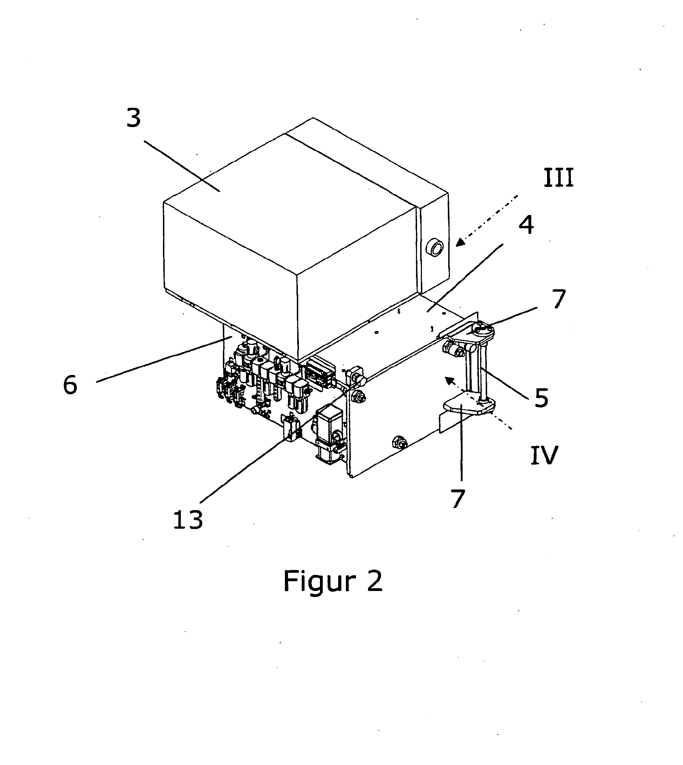

Gemäß **Fig. 2** ist an der Laserkonsole 4 ein Geräteblech **6** vorgesehen, an dem beispielsweise Ventile, Druckregler, Strömungswächter, eine Pumpe usw. angebracht werden können. Die Laserkonsole 4 weist einen oberen und einen unteren Abschnitt **7** auf. Die beiden Abschnitte 7 tragen zur Halterung der Achse 6 bei, welche an dem Maschinenrahmen gemäß Figur 1 schwenkbar befestigt werden kann.

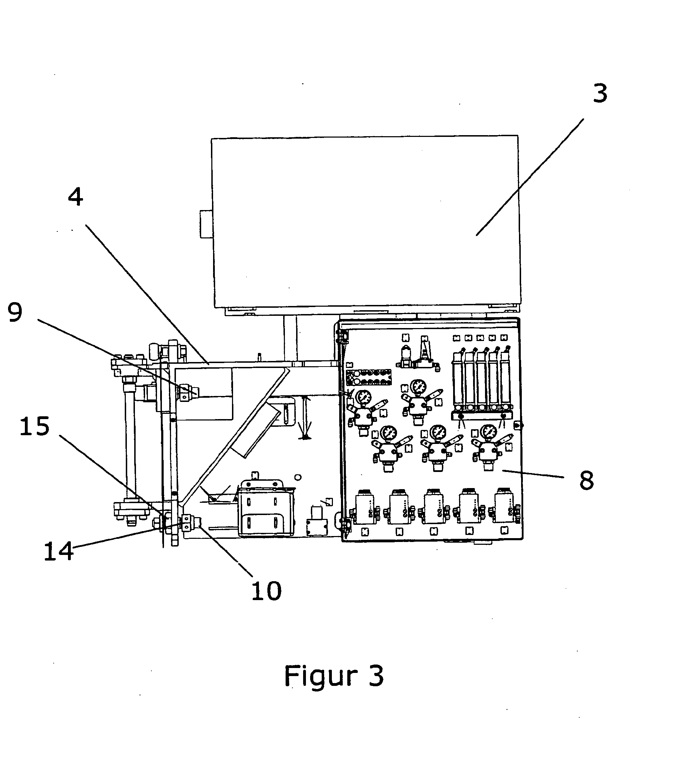

Gemäß **Fig. 3** ist an der Laserkonsole 4 ein weiteres Geräteblech **8** vorgesehen, an dem beispielsweise Manometer angebracht werden können.

Die Montage der Laserkonsole 4 am Maschinenrahmen 2 umfasst das Ausrichten der Laserkonsole 4 und das Verschwenken der Laserkonsole 4.

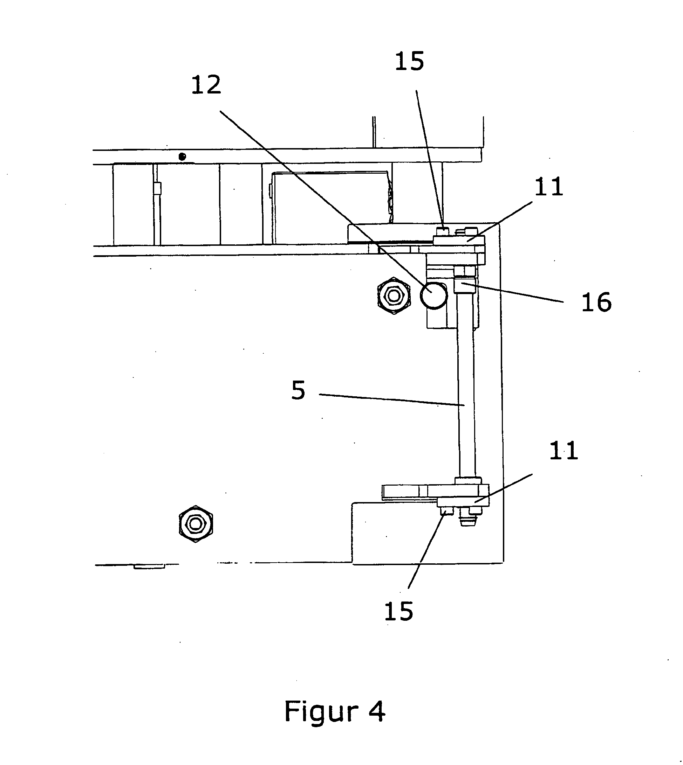

Zum Ausrichten wird Laserkonsole 4 über die Achse 5 am Maschinenrahmen 2 vormontiert . Hierzu werden die Befestigungsschrauben **9** und **10** zunächst handfest angezogen (siehe Figur 4). Dann werden die Lagerplatten **11** gelöst, so dass die Achse 5 freigesetzt wird. Ein Bolzen **12** dient als Zentrierhilfe. Zur Ausrichtung der Laserkonsole 4 parallel zum Maschinenrahmen ist ein Exzenterbolzen **13** (siehe Figur 1 und 2) vorgesehen. Zur Einstellung der Strahlrichtung ist die tangentiale Verbindungslinie **T** nicht dargestellter Stifte gemäß Figur 1 auf der Laserkonsole 4 zur Fläche **F** an der Stirnseite des Maschinenrahmens 2 zu justieren. Nach dem Anlegen der Stellgewindebuchsen **14** und dem Kontern mit Sechskantmuttern **15** werden die Zylinderschrauben 9 und 10 fest angezogen.

Zum Verschwenken der Laserkonsole 4 in die Transportposition werden die Lagerplatten 11 mithilfe der Befestigungsschrauben **15** gemäß **Figur 4** befestigt. Die Befestigungsschrauben 9 und 10 gemäß Figur 3 werden gelöst. Über eine Gewindebuchse **16** wird die Laserkonsole 4 ausgehoben. Die Laserkonsole 4 kann verschwenkt werden.

Analog kann die Laserkonsole 4 in die Arbeitsposition zurück verschwenkt werden. Die Laserkonsole 4 wird verschwenkt und seitlich an den Zentrierbolzen 12 angelegt. Über die Gewindebuchse 16 wird die Laserkonsole 4 abgesenkt. Anschließend werden die Befestigungsschrauben 14 wieder angezogen. Die Lagerplatten 11 werden gelöst. Die weiteren Befestigungsschrauben 9 und 10 werden ebenfalls angezogen.

## Patentansprüche

1. Laserbearbeitungsmaschine (1) mit einem Maschinenrahmen (2) und einem an den Maschinenrahmen (2) befestigten Lasergenerator (3), wobei der Lasergenerator (3) relativ zum Maschinenrahmen (2) bewegbar ist, **dadurch gekennzeichnet, dass** der Lasergenerator (3) an dem Maschinenrahmen (2) zur Vermeidung einer Störkontur zwischen einer Transportposition und einer Arbeitsposition schwenkbar angeordnet ist, wobei der Lasergenerator (3) in der Arbeitsposition seitlich über den Maschinenrahmen hinausragt und in der Transportposition nicht seitlich über den Maschinenrahmen hinausragt und der Lasergenerator (3) an einer Laserkonsole (4) angeordnet ist, welche über eine Achse (5) an dem Maschinenrahmen (2) angebracht ist und eine Zentrierhilfe vorgesehen ist.

2. Laserbearbeitungsmaschine nach Anspruch 1, **dadurch gekennzeichnet, dass** Befestigungsmittel zur Arretierung der verschwenkten Laserkonsole in einer Arbeitsposition und in einer Transportposition vorgesehen sind.

3. Laserbearbeitungsmaschine nach einem der vorhergehenden Ansprüche, **dadurch gekennzeichnet, dass** die Laserkonsole (4) ausfahrbare Stützfüße besitzt.

4. Laserbearbeitungsmaschine nach einem der vorhergehenden Ansprüche, **dadurch gekennzeichnet, dass** Mittel zum Ausrichten der Laserkonsole am Maschinenrahmen vorgesehenen sind.

5. Laserbearbeitungsmaschine nach einem der vorhergehenden Ansprüche, **dadurch gekennzeichnet, dass** elektrische Kabel oder Leitungen von an der Laserkonsole (4) angebrachten Instrumenten oder Aggregaten gebündelt im Bereich des Schwenkachse nach unten geführt werden.

## Claims

1. Laser processing machine (1) having a machine frame (2) and a laser generator (3) fastened to the machine frame (2), the laser generator (3) being movable relative to the machine frame (2), **characterised in that** the laser generator (3) is arranged on the machine frame (2) to be pivotable between a transportation position and a working position for preventing an obtrusive contour, wherein the laser generator (3) laterally projects past the machine frame in the working position and does not laterally project past the machine frame in the transportation position, and that the laser generator (3) is arranged on a laser console (4) which is fitted to the machine frame (2) by way of a shaft (5) and that a centring aid is provided.

2. Laser processing machine according to claim 1, **characterised in that** fastening means are provided for locking the pivoted laser console in a working position and in a transportation position.

3. Laser processing machine according to any one of the preceding claims, **characterised in that** the laser console (4) has telescoping support feet.

4. Laser processing machine according to any one of the preceding claims, **characterised in that** means are provided for aligning the laser console on the machine frame.

5. Laser processing machine according to any one of the preceding claims, **characterised in that** electrical cables or lines from instruments or units fitted to the laser console (4) are guided downwards in a bundled manner in the region of the pivot shaft.

## Revendications

1. Machine d'usinage par laser (1) avec un châssis de machine (2) et un générateur laser (3) fixé au châssis de machine (2), le générateur laser (3) étant mobile par rapport au châssis de machine (2), **caractérisée en ce que** le générateur laser (3) est disposé de manière pivotante sur le châssis de machine (2) entre une position de transport et une position de travail pour éviter un contour perturbateur, le générateur laser (3) dépassant latéralement du châssis de machine (2) dans la position de travail et ne dépassant pas latéralement du châssis de machine (2) dans la position de transport et le générateur laser (3) étant disposé sur une console de support (4) qui est montée sur le châssis de machine (2) par l'intermédiaire d'un axe (5) et un moyen de centrage étant prévu.

2. Machine d'usinage par laser selon la revendication 1, **caractérisée en ce que** des moyens de fixation pour immobiliser la console de support pivotée dans une position de travail et dans une position de transport sont prévus.

3. Machine d'usinage par laser selon une des revendications précédentes, **caractérisée en ce que** la console de support (4) possède des pieds d'appui déployables.

4. Machine d'usinage par laser selon une des revendications précédentes, **caractérisée en ce que** des moyens pour aligner la console de support sur le châssis de machine sont prévus.

5. Machine d'usinage par laser selon une des revendications précédentes, **caractérisée en ce que** des câbles ou lignes électriques d'instruments ou d'ensembles montés sur la console de support (4) sont guidés vers le bas en faisceau dans la zone de l'axe de pivotement.
